# EUROPÄISCHE PATENTSCHRIFT

(11) **EP 3 958 177 B1**
(45) Veröffentlichungstag und Bekanntmachung des Hinweises auf die Patenterteilung: **06.05.2026**
(21) Anmeldenummer: 20191292.0
(22) Anmeldetag: 17.08.2020
(51) Int. Cl.: G06K 19/02, G06K 19/077, H01Q 1/22, G06F 1/16

(54) **TEXTILER RFID-TRANSPONDER UND VERFAHREN ZUM AUFBRINGEN EINES TEXTILEN RFID-TRANSPONDERS AUF TEXTILIEN**
TEXTILE RFID TRANSPONDER AND METHOD FOR APPLYING A TEXTILE RFID TRANSPONDER TO TEXTILES
TRANSPONDEUR RFID TEXTILE ET PROCÉDÉ D'APPLICATION D'UN TRANSPONDEUR RFID TEXTILE AUX TEXTILES

(43) Veröffentlichungstag der Anmeldung: 23.02.2022
(73) Patentinhaber: TexTrace AG, 5070 Frick (CH)
(72) Erfinder: BUEHLER, Stephan, 8107 Buchs (CH); BOLTERSDORF, Dirk, 52372 Kreuzau (DE)
(74) Vertreter: HGF

(56) Entgegenhaltungen:
- EP-A2- 1 983 468
- WO-A1-2008/011732
- WO-A1-2008/034269
- WO-A1-2009/000446
- WO-A1-2009/036155
- WO-A1-2010/116935
- WO-A1-2011/160606
- DE-A1- 10 155 935
- DE-A1- 102006 011 596
- DE-A1- 102007 016 584
- DE-A1- 102008 036 101
- DE-A1- 102010 017 684
- DE-A1- 102014 220 087
- DE-B3- 102015 208 524
- JP-A- 2002 298 110
- US-A1- 2014 291 409
- US-A1- 2020 117 973

## Beschreibung

### TECHNISCHES GEBIET DER ERFINDUNG

Die Erfindung betrifft einen textilen RFID-Transponder, insbesondere einen RFID-Transponder mit einem in ein textiles Trägersubstrat eingebrachten leitfähigen Antennenfäden. Die Erfindung betrifft weiterhin ein textiles Etikett mit einem derartigen textilen RFID-Transponder. Ferner betrifft die Erfindung ein Verfähren zum Aufbringen von textilen RFID-Transpondern mit textilen Trägersubstraten auf zu etikettierenden Textilien.

### TECHNISCHER HINTERGRUND

In der textilen Wertschöpfungskette ist es Usus, Etiketten mit Hochfrequenz- und/oder Ultrahochfrequenztranspondern zu verwenden, sogenannte "radio frequency identification tags" (RFID-Tags). Auf derartigen RFID-Transpondern können Daten im Zusammenhang mit Herstellung, Identifikation, Verteilung, Verkauf und Marketing des etikettierten Produktes auslesbar gespeichert werden. Durch RFID-Technologie ergeben sich breite Anwendungsmöglichkeiten im Produktlebenszyklusmanagement ("product lifecycle management", PLM), das heißt bei der individuellen Verfolgung der gekennzeichneten Textilien über ihren gesamten Lebenszyklus bzw. Gebrauchszyklus hinweg, beim Diebstahls- oder Falschanwendungsprävention, oder auch bei der Nachverfolgung der Entsorgung und Wiederverwertung.

RFID-Transponder sind senderseitige Systemkomponenten, welche bei der berührungslosen und automatischen Ortung und Identifizierung mit Hilfe von hochfrequenten oder ultrahochfrequenten Radiowellen eingesetzt werden. Die RFID-Transponder sind mobile Sender, welche durch individualisierende elektronische Kennungen bzw. Codes Gegenstände, an denen sie angebracht werden, gegenüber Systemempfängerkomponenten identifizieren können. Dabei werden Sender und Empfänger über vom Lesegerät erzeugte geringreichweitige magnetische Wechselfelder oder hochfrequente Radiowellen gekoppelt, um Daten vom RFID-Transponder zum Lesegerät übertragen zu können. Ein passiver RFID-Transponder kann über diese elektromagnetische Kopplung auch mit Energie versorgt werden.

Für sehr leichte und feine Textilstoffe, wie etwa Oberbekleidung, ist es wünschenswert, RFID-Transponder zu entwickeln, welche sich möglichst platzsparend und für den Verwender der Textilstoffe wenig störend, aber dennoch stabil und gegenüber Waschvorgängen und sonstigen mechanischen Belastungen widerstandsfähig in die Textilstoffe integrieren lassen.

Das Dokument US 2014/0291409 A1 offenbart RFID-Tags für Produkte aus flexiblem Material wie etwa Kleidung und Wäscheprodukte, die an den Produkten aus flexiblem Material anbringbar sind. Diese RFID-Tags weisen einen durchgehender RFID-Antennenkörper zur Ausbildung eines RFID-Etiketts auf. Das Dokument EP 3 640 850 A1 offenbart RFID-Systeme mit einem RFID-Chip und einer Antenne zum Senden und/oder Empfangen von elektromagnetischen Wellen, welche auf einem Trägermaterial aufgebracht sind. Die Antenne besteht aus einem elektrisch leitfähigen Faden, welcher eine linienförmige, kreuzungsfreie Struktur ausbildet. Ein Segment des elektrisch leitfähigen Fadens umschlingt den RFID-Chip berührungsfrei und koppelt dadurch induktiv in den RFID-Chip ein. Das Dokument WO 2009/036155 A1 offenbart ein Gewebe, das ein thermoplastisches Schmelzbares Garn enthält, und ein Verfahren zur Herstellung eines Gewebeartikels, das ein thermoplastisches schmelzbares Garn enthält.

Des weiteren, offenbart das Dokument DE 10 2007 016 584 A1 einen textilen Informationsträger be-stehend aus einem textilen Etikett, einem textilen Produkt oder einem über eine elektrische Antenne mit dem Produkt verbundenen Etikett und einem Detektierplättchen, das ein elektronisches Chipmodul umfasst. Das Detektierplättchen ist in den Stoff des Textiletiketts, Textils oder Etiketts eingewebt. Das Dokument WO 2009/000446 A1 beschreibt ein Etikett für Textilien, das mit einem Kunststofffoli-enträger für eine Metallantenne versehen ist. Weiterhin beschreibt das Dokument WO 2008/011732 A1 einen RFID-Tag mit einem Textildesign-Tag, auf dessen Rückseite ein Transponder angeordnet ist. Das Dokument DE 10 2008 036 101 A1 offenbart ein textiles Material mit einer elektrisch leitfähigen Struktur.

### ZUSAMMENFASSUNG DER ERFINDUNG

Eine der Aufgaben der Erfindung liegt demnach darin begründet, Lösungen für die Optimierung der Integrierbarkeit von RFID-Transpondern in textile Substrate zu finden, insbesondere für die Anwendung in der textilindustriellen Wertschöpfungskette.

Die Erfindung wird in den unabhängigen Ansprüchen definiert. Die abhängigen Ansprüche sind auf bevorzugte Ausführungsbeispiele gerichtet.

Eine wesentliche Idee der Erfindung besteht darin, einen textilen RFID-Transponder so auszugestalten, dass er bei einem Heißpressen mit einem zu etikettierenden Stoff Teil des Stoffes wird. Dies kann dadurch erreicht werden, dass flächige Fadengebilde als Trägersubstrat für die elektrischen bzw. elektronischen Komponenten verwendet werden und das flächige Fadengebilde über Schmelzklebegarn beim Heißpressen mit dem zu etikettierenden Stoff integral verbunden werden kann. Dies bietet insbesondere den Vorteil, dass die textilen RFID-Transponder beim Heißpressen transparent und weich werden.

Dadurch werden sie nahezu unsichtbar und können auf Stoffen jeder Farbe ohne Beeinträchtigung der Optik des Stoffes aufgebracht werden. Dies ist besonders für hochwertige und/oder leichte Kleidungsstücke wie etwa T -Shirts, Blusen oder ähnliches besonders vorteilhaft, da der integrierte textile RFID-Transponder weder optisch noch vom Tragekomfort her als störender Fremdkörper wirkt.

Wenn die textilen RFID-Transponder integraler Teil des zu etikettierenden Stoffes werden, können sie aufgrund der adhäsiven Haftung der Klebstoffe der Schmelzklebegarne auch nicht mehr entfernt werden, ohne den etikettierten Stoff zu zerstören oder zu beschädigen. Dies bietet große Vorteile bei der Diebstahlsicherung oder bei der eineindeutigen Nachverfolgbarkeit des Stoffes entlang der textilen Wertschöpfungskette bis zum Recycling.

Weiterhin kann der textile RFID-Transponder als integraler Teil des etikettierten Stoffes eine ähnliche Dehnbarkeit und Elastizität wie der etikettierte Stoff aufweisen, wodurch die Funktionalität des etikettierten Stoffes in vorteilhafter Weise nicht oder nur minimal beeinträchtigt wird. Ein erfindungsgemäßes textiles Etikett kann als Modulsubstrat für das RFID-Chipmodul mindestens eines der Materialien aus der Gruppe von Polyethylenterephthalat (PET), Polyimid (PI), FR4 (Verbundmaterial aus Glasfasergewebe und Epoxidharz) und Polyetheretherketon (PEEK) aufweisen. Dabei kann das RFID-Chipmodul grundsätzlich als mehrlagiges Laminat ausgebildet werden. Dies bietet Vorteile bei der Erfüllung von Anforderungen hinsichtlich der Waschechtheit, der Wasserdichtigkeit und/oder der chemischen Resistenz gegenüber Stoffen wie etwa Schweiß oder Reinigungsmitteln beim Einsatz für die Etikettierung von Textilien.

Gemäß einigen Ausführungsformen des erfindungsgemäßen RFID-Transponders kann das flächige Fadengebilde als Webware oder Flechtware ausgebildet werden. Alternativ dazu kann gemäß einigen weiteren Ausführungsformen des erfindungsgemäßen RFID-Transponders kann das flächige Fadengebilde als
Maschenware, insbesondere als Kettengewirke, ausgebildet werden. Maschenwaren entstehen als Gestricke (auch "Einfadengewirke" genannt) oder Gewirke, bei denen die Fäden in Schleifen (auch "Maschen" genannte) verschlungen werden. Maschenwaren haben in der Regel eine hohe Elastizität und sind durch die nur lokale Vermaschung lockerer als Gewebe. Durch ihre Elastizität sowohl in Längs- als auch in Querrichtung, ihre Formbarkeit, ihre Dehnbarkeit und ihre Leichtheit eignen sich Maschenwaren, insbesondere Kettengewirke, für den Einsatz in textilen RFID-Labeln. Textile RFID-Label auf der Basis von Maschenwarensubstraten knittern weniger als Gewebe, ermöglichen einen guten Luft- und Feuchtigkeitsaustausch. Einfadengewirke bzw. Gestricke entstehen durch Häkel- oder Strickprozesse, bei denen jede Maschenreihe einen einzigen Faden aufweist, der Schlingen bildet, die in Schlingen der benachbarten Maschenreihen eingreifen. Bei Gewirken wird eine Vielzahl synchron betätigbarer Wirknadeln eingesetzt, wie beispielsweise bei der Kuliertechnik, bei der eine maschinelle Maschenbildung über eine ganze Wirknadelreihe hinweg gleichzeitig erfolgt. Bei der Kettenwirktechnik werden parallel laufender Kettfäden in Längsrichtung maschenförmig miteinander über Schussfäden miteinander verbunden.

Gemäß einigen weiteren Ausführungsformen des erfindungsgemäßen RFID-Transponders kann das flächige Fadengebilde mindestens ein erstes Schmelzklebegarn aufweisen, welches als Kettfaden des Kettengewirkes in das flächige Fadengebilde eingewirkt ist. Dabei kann gemäß einigen weiteren Ausführungsformen das flächige Fadengebilde mehrere erste Schmelzklebegarne mit jeweils einem Trägergarn aufweisen, welche im Bereich der Ränder des flächigen Fadengebildes, im Bereich des RFID-Chipmodul und/oder im Bereich des leitfähigen Antennenfadens in das flächige Fadengebilde eingewirkt sind. Schmelzklebegarne, bei denen Trägergarne mit Klebstoffe umhüllt sind, sind einerseits stabiler und weisen andererseits eine größere Menge an Klebstoffen auf. Dadurch sind solche Schmelzklebegarne mit Trägergarnen besonders für die mechanisch stärker beanspruchten Teile des RFID-Transponders wie die Ränder, der Bereich um das Chipmodul und der Bereich entlang der Transponderantenne besser geeignet, um dem RFID-Transponder die nötige Stabilität und Adhäsionskraft zu verleihen.

Gemäß einigen weiteren Ausführungsformen des erfindungsgemäßen RFID-Transponders kann das flächige Fadengebilde mindestens ein zweites, trägergarnloses Schmelzklebegarn aufweisen. Dabei kann gemäß einigen weiteren Ausführungsformen das flächige Fadengebilde mehrere zweite, trägergarnlose Schmelzklebegarne aufweisen, welche als Langschussfäden und/oder Teilschussfäden in das flächige Fadengebilde eingewirkt sind. Trägergarnlose Schmelzklebegarne weisen weniger Klebstoff als trägergarnbehaftete Schmelzklebegarne auf und sind leichter. Dadurch kann der RFID-Transponder dünn, flexibel und leicht gehalten werden, ohne seine mechanische Stabilität zu sehr zu beeinträchtigen. Ein trägergarnloses Schmelzklebegarn kann in manchen Ausführungsformen insbesondere als Teilschussfaden entlang der Erstreckung des leitfähigen Antennenfadens in das flächige Fadengebilde eingewirkt werden. Dadurch wird dem Antennenfaden zusätzliche Formstabilität verliehen.

Gemäß einigen weiteren Ausführungsformen des erfindungsgemäßen RFID-Transponders kann das die chipgebundene Modulantenne des RFID-Chipmoduls eine Schleifenantenne sein. Gemäß einigen weiteren Ausführungsformen des erfindungsgemäßen RFID-Transponders kann der mindestens eine leitfähige Antennenfaden eine langgestreckte oder undulierende Transponderantenne als Dipolantenne bilden. Alternativ dazu kann es auch möglich sein, leitfähige Antennenfäden in Form einer Patch-Antenne als Transponderantenne auszubilden. Gemäß einigen weiteren Ausführungsformen des erfindungsgemäßen RFID-Transponders kann das RFID-Chipmodul mit einem Textiltransferklebstoff beschichtet und über den Textiltransferklebstoff mit dem textilen Trägersubstrat waschfest verbunden sein.

Gemäß einigen Ausführungsformen kann das Erzeugen des textilen Trägersubstrats ein Weben oder Flechten umfassen. Alternativ dazu kann gemäß einigen weiteren Ausführungsformen des Verfahrens des dritten Aspekts der Erfindung das flächige Fadengebilde als Maschenware, insbesondere als Kettengewirke, ausgebildet werden. Dabei kann das Einbringen des mindestens einen Schmelzklebegarns ein Einketten in das flächige Fadengebilde umfassen. Maschenwaren entstehen als Gestricke (auch "Einfadengewirke" genannt) oder Gewirke, bei denen die Fäden in Schleifen (auch "Maschen" genannte) verschlungen werden. Maschenwaren haben in der Regel eine hohe Elastizität und sind durch die nur lokale Vermaschung lockerer als Gewebe. Durch ihre Elastizität sowohl in Längs- als auch in Querrichtung, ihre Formbarkeit, ihre Dehnbarkeit und ihre Leichtheit eignen sich Maschenwaren, insbesondere Kettengewirke, für den Einsatz in textilen RFID-Labeln. Textile RFID-Label auf der Basis von Maschenwarensubstraten knittern weniger als Gewebe, ermöglichen einen guten Luft- und Feuchtigkeitsaustausch. Einfadengewirke bzw. Gestricke entstehen durch Häkel- oder Strickprozesse, bei denen jede Maschenreihe einen einzigen Faden aufweist, der Schlingen bildet, die in Schlingen der benachbarten Maschenreihen eingreifen. Bei Gewirken wird eine Vielzahl synchron betätigbarer Wirknadeln eingesetzt, wie beispielsweise bei der Kuliertechnik, bei der eine maschinelle Maschenbildung über eine ganze Wirknadelreihe hinweg gleichzeitig erfolgt. Bei der Kettenwirktechnik werden parallel laufender Kettfäden in Längsrichtung maschenförmig miteinander über Schussfäden miteinander verbunden.

Gemäß einigen Ausführungsformen kann das Schmelzklebegarn ein Trägergarn aufweisen. Es kann dabei in manchen Ausführungsformen möglich sein, dass das Schmelzklebegarn im Bereich der Ränder des flächigen Fadengebildes, im Bereich des RFID-Chipmodul und/oder im Bereich des mindestens einen leitfähigen Antennenfadens in das flächige Fadengebilde eingewirkt wird. Dies hat eine lokale Verstärkung der mechanischen Stabilität in den jeweiligen Bereichen aufgrund der verbesserten Adhäsion beim Aufschmelzen der Schmelzklebegarne zur Folge.

Gemäß einigen Ausführungsformen kann das Erzeugen des textilen Trägersubstrats ein Einwirken mehrerer trägergarnloser Schmelzklebegarne als Langschussfäden und/oder Teilschussfäden in das flächige Fadengebilde umfassen.

Gemäß einigen Ausführungsformen kann das Einwirken mehrerer trägergarnloser Schmelzklebegarne ein Einwirken eines trägergarnlosen Schmelzklebegarns als Teilschussfaden entlang der Erstreckung des leitfähigen Antennenfadens in das flächige Fadengebilde umfassen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird
dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 einen textilen RFID-Transponders in schematischer Draufsicht gemäß einer Ausführungsform der Erfindung;
Fig. 2 von schematisch dargestellten Details eines Trägersubstrats des textilen RFID-Transponders nach Fig. 1 gemäß möglicher Ausführungsformen der Erfindung;
Fig. 3 ein schematisches Schaubild funktioneller Komponenten einer Heißpressanlage für das Aufbringen von textilen RFID-Transpondern auf zu etikettierenden Textilien gemäß einer weiteren Ausführungsform der Erfindung;
Fig. 4 eine Illustration eines Kleidungsstückes aus Textilien mit einem darin integrierten RFID-Transponder gemäß einer weiteren Ausführungsform der Erfindung;
Fig. 5 ein abstrahiertes Flussdiagramm eines beispielhaften Verfahrens zur Herstellung eines RFID-Transponders gemäß einer weiteren Ausführungsform der Erfindung; und
Fig. 6 ein abstrahiertes Flussdiagramm eines beispielhaften Verfahrens zum Aufbringen von textilen RFID-Transpondern auf zu etikettierenden Textilien gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende

Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### AUSFÜHRLICHE BESCHREIBUNG VON AUSFÜHRUNGSBEISPIELEN

RFID-Transponder im Sinne der vorliegenden Erfindung sind elektronische Module, die im Wesentlichen einen elektronischen Speicherchip und eine mit dem Speicherchip gekoppelte und in das Modul integrierte Antenne aufweisen. RFID-Transponder können in verschiedenen Frequenzbändern elektromagnetische Signale aussenden und empfangen, beispielsweise im Bereich 125 kHz ("low frequency", LF) und 5,8 GHz ("super-high frequency", SHF). Je nach gewünschtem Frequenzband wird die Bauform der integrierten Antenne gewählt. Von spezieller Bedeutung sind Frequenzbänder um 13,56 MHz ("high frequency", HF) und zwischen 860 MHz bis 960 MHz ("ultra-high frequency", UHF).

UHF-Frequenzbänder können beispielsweise in der Logistik verwendet werden, da auf diesen Kanälen eine höhere Zugriffs- und Auslesereichweite erreicht werden kann als auf HF-Kanälen. Frequenz, Antennenform und Antennengröße können entsprechend gewählt werden, um eine gewünschte Zugriffs- und Auslesereichweite, Robustheit gegenüber Störungen und Umwelteinflüssen sowie Robustheit gegenüber Störungen von RFID-Transpondern untereinander zu gewährleisten. Über ein elektromagnetisches Feld zwischen einem Lesegerät und der integrierten Antenne des RFID-Transponders kann eine Luftschnittstelle etabliert werden, über die drahtlos und unter Nutzung vorgegebener Datenaustauschprotokolle Daten zwischen dem Speicherchip des RFID-Transponders und einem Prozessor des Lesegerätes ausgetauscht werden können.

Schmelzklebegarne im Sinne der vorliegenden Erfindung umfassen spinnbare Fasern, welche eine grobe Feinheit im Bereich zwischen etwa 10 dtex und 200 dtex sowie einen Schmelzbereich von etwa 80°C bis 140°C aufweisen. Schmelzklebegarne im Sinne der vorliegenden Erfindung können dabei durch

Copolymerisation gewonnene Polyamide oder Polyester aufweisen, wie beispielsweise copolymerisierte ternäre Gemischs von Polyamidmonomeren oder copolymerisierte Ethylen-Vinylazetat-Gemische. Die Copolymerisation der Schmelzklebegarne kann dabei beispielsweise mit II-Aminoundecansäure, Laurinlactam, Caprolactam, Laurinlactam oder Hexamethylendiamin bewirkt werden, wobei diese Monomere unter Stickstoffatmosphäre erwärmt werden, um spinnfähige Garne einstellbarer Schmelztemperatur zu erhalten. Die Schmelztemperatur ergibt sich dabei in Abhängigkeit des prozentualen Volumenanteils der für die Copolymerisation eingesetzten Monomere.

Schmelzklebegarne im Sinne der vorliegenden Erfindung können ausschließlich aus durch Copolymerisation gewonnenen Polyamiden oder Polyestern bestehen; es kann aber auch möglich sein, nur einen Teil der Schmelzklebegarne durch schmelzfähige Garnbestandteile zu bilden, und einen anderen Teil durch wärmebeständige Trägergarne zu bilden. Diese Trägergarne werden häufig auch "Seele" genannt. Der Anteil der schmelzfähigen Garnbestandteile kann dabei je nach gewünschten Schmelzeigenschaften variieren. Die Seele kann zum Beispiel durch elastomere Polyesterharze oder Polyurethanharze mit höherem Feinheitsgrad im Bereich zwischen etwa 100 dtex und 800 dtex gebildet werden, die eine hinreichend hohe Wärmebeständigkeit im Schmelzbereich der schmelzfähigen Garnbestandteile sowie eine gute Resistenz gegenüber im Bereich der Textilbearbeitung gängigen Tensiden und Lösungsmitteln aufweisen.

Schmelzklebegarne im Sinne der vorliegenden Erfindung lassen sich in herkömmlichen textilen Verarbeitungsprozessen verarbeiten, beispielsweise in Prozessen zur Herstellung von Webwaren oder Maschenwaren. Solche Schmelzklebegarne können in ein flächiges Fadengebilde über Wirken, Weben, Zwirnen, Stricken, Flechten oder Nähen eingebracht werden. Bei einer kurzzeitigen Erwärmung eines flächigen Fadengebildes, in welches Schmelzklebegarne eingebracht sind, auf etwa 10°C bis 20°C über Schmelzpunkt des Schmelzklebegarne beginnt das Polymer der schmelzfähigen Garnbestandteile in die benachbarten Fasern zu fließen und erstarrt dort nach Abkühlung des flächigen Fadengebildes wieder. Beim Erstarren verklebt das erhitzte Polymer die Fasern, in die es eingeflossen ist, in einem Verbindungs- oder Adhäsionsprozess. Beispielsweise kann es möglich sein, einen Thermofixierprozess einzusetzen, um zwei unterschiedliche flächige Fadengebilde mit Schmelzklebegarnbestandteilen miteinander zu verkleben.

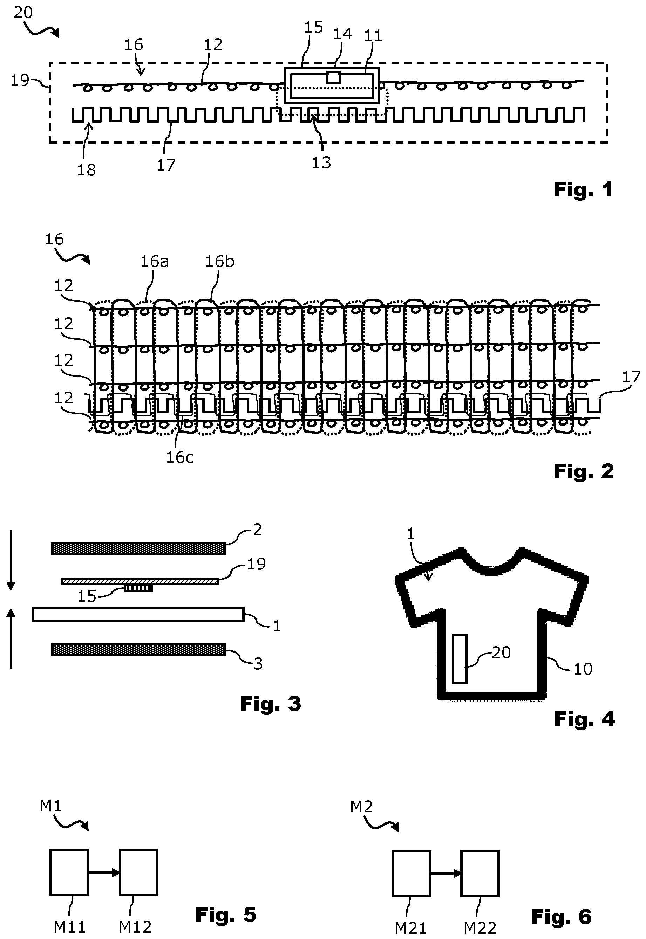

Fig. 1 zeigt einen RFID-Transponder 20, welcher beispielsweise als textiles Etikett eingesetzt werden kann. Dabei kann der RFID-Transponder 20 selbst das textile Etikett darstellen oder ein RFID-Transponder kann auf einem weiteren Etikettensubstrat zur Bildung des textilen Etiketts 10 bestückt werden.

Der RFID-Transponder 20 umfasst ein textiles Trägersubstrat 19, beispielsweise aus einem gewebten oder gewirkten Textilstoff. Dazu kann das textile Trägersubstrat 19 ein in geeigneter Weise ausgestaltetes flächiges Fadengebilde 16 aufweisen, welches beispielsweise in einer Webtechnik, einer Stricktechnik, einer Flechttechnik oder einer Wirktechnik gebildet werden kann. Das textile Trägersubstrat 19 kann beispielsweise eine im Wesentlichen rechteckige Außenkontur aufweisen und kann dafür vorgesehen sein, in einem Kleidungsstück eingenäht oder eingeklebt zu werden.

In das flächige Fadengebilde 16 des textilen Trägersubstrats 19 ist eine Dipolantenne eingewirkt oder eingewebt, beispielsweise aus einem elektrisch leitfähigen Antennenfaden 17, welcher je nach Bildungstechnik des flächigen Fadengebildes 16 als Webfaden, Schussfaden oder Kettfaden in das flächige Fadengebilde 16 eingebracht werden kann. Die Dipolantenne dient der Signalübertragung im Ultrahochfrequenzfernfeld oder im Hochfrequenzfernfeld. Hierzu kann die Dipolantenne beispielsweise zwei langgestreckte Arme aufweisen, die entweder linear verlaufen oder rechteckige, wellenförmige oder dreieckige Undulationen aufweisen. Im Beispiel der Fig. 1 und 2 sind ohne Beschränkung der Allgemeinheit rechteckige Undulationen des ansonsten im Wesentlichen langgestreckten, als Transponderantenne 18 dienenden elektrisch leitfähigen Antennenfadens 17 illustriert. Die Transponderantenne 18 kann im Bereich der Mitte des textilen Trägersubstrats 19 entlang der Längserstreckung zusätzlich einen einseitig offenen Schleifenantennenabschnitt 17 aufweisen. Ebenso kann es möglich sein, entlang der zwei langgestreckten Arme der Transponderantenne 18 nur abschnittsweise undulierende oder mäanderförmige Bereiche zu bilden. Bei einer Faltung von Dipolantennenarmen zu Mäandern, fraktalen Strukturen oder Undulationen lassen sich gute Kompromisse bezüglich der elektrischen Eigenschaften ergeben und gleichzeitig die Dimensionen der Dipolantenne platzsparend begrenzen.

Auf dem textilen Trägersubstrat 19 ist auf einer ersten Seite (in Fig. 1 die Oberseite, d.h. die dem Betrachter zugewandte Seite) ein RFID-Chipmodul 15 aufgebracht. Dieses RFID-Chipmodul 15 weist eine chipgebundene Modulantenne 11 auf, beispielsweise eine Schleifenantenne. Das RFID-Chipmodul 15 ist dabei derartig in Bezug auf die Transponderantenne 18 platziert, dass Modulantenne 11 induktiv in die durch den elektrisch leitfähigen Antennenfaden 17 gebildete Transponderantenne 18 einkoppeln kann. Die Platzierung des RFID-Chipmodul 15 kann beispielsweise mittig oder gegenüber einer Mitte des Trägersubstrats 19 lateral versetzt und gegebenenfalls über einem als Schleifenantennenabschnitt der Transponderantenne 18 erfolgen. Der Bereich der induktiven Kopplung ist in Fig. 1 schematisch mit dem Bezugszeichen 13 angedeutet.

Das RFID-Chipmodul 15 kann beispielsweise auf einem an der Unterseite mit einem Textiltransferklebstoff beschichtet sein. Dieser Textiltransferklebstoff vermittelt die dauerhafte Haftung des RFID-Chipmoduls 15 auf dem textilen Trägersubstrat 19. Insbesondere kann der Textiltransferklebstoff derart gewählt werden, dass der RFID-Transponder 20 bei seiner Verwendung als textiles Etikett oder in einem textilen Etikett mehrfach gewaschen werden kann, ohne dass sich die Verbindung zwischen RFID-Chipmodul 15 und textilem Trägersubstrat 19 löst.

Das RFID-Chipmodul 20 kann beispielsweise ein Modulsubstrat aufweisen, auf dem ein RFID-Prozessorchip 14 und die Modulantenne 11 angeordnet sind. Der RFID-Prozessorchip 14 kann geeignete elektronische Schaltungen wie beispielsweise einen Mikroprozessor, einen FPGA oder einen ASIC aufweisen, um die durch die RFID-Technologie erforderlichen Datenverarbeitungsschritte vorzunehmen. Das RFID-Chipmodul 20 umfasst weiterhin einen (nicht gezeigten) Datenspeicher, welcher in den RFID-Prozessorchip 14 integriert sein kann, sowie gegebenenfalls einen temporären Energiespeicher für elektrische Energie zum zeitweisen Betrieb des RFID-Prozessorchips 14, wie beispielsweise einen Kondensator.

Das Modulsubstrat kann beispielsweise aus einem Material oder verschiedenen Materialien zusammengesetzt sein. Beispielhafte Materialien und Materialkombination sind Polyethylenterephthalat (PET), Polyimid (Pl), FR4 und Polyetheretherketon (PEEK). Das Modulsubstrat kann zusätzlich mit einem mehrschichtigen Laminat aus PET -Folien, vernetzenden Klebstoffen und/oder druckempfindlichen Klebstoffen ("pressure sensitive adhesives", PSA) versehen werden, um das Modulsubstrat und die darauf aufgebrachten Schaltungselemente
gegenüber Wäschezyklen oder anderen textilüblichen Behandlungsschritten zu schützen und die Funktionsfähigkeit des RFID-Transponders 20 zu erhalten. Die Modulantenne 11 kann beispielsweise jeweils aus auf dem Modulsubstrat abgeschiedenen elektrisch leitfähigen Schichten aus beispielsweise Aluminium oder Kupfer ausgebildet werden, wie etwa durch Schablonenätzen, PVD oder CVD. Auch additive Verfahren zum Aufbringen von leitfähigen Materialien wie zum Beispiel Graphene oder leitfähige Tinten sind möglich.

Wie sich in Fig. 1 erkennen lässt, ist in das flächige Fadengebilde 16 des textilen Trägersubstrats 19 mindestens ein Schmelzklebegarn, in Fig. 1 beispielhaft mit dem Bezugszeichen 12 gekennzeichnet, eingebracht. Beispielsweise kann ein erstes Schmelzklebegarn als Kettfaden 12 in das als Kettengewirke ausgebildete flächige Fadengebilde 16 eingewirkt werden.

In Fig. 2 sind beispielhaft mehrere erste Schmelzklebegarne gezeigt, welche jeweils als Kettfaden 12 des Kettengewirkes in das flächige Fadengebilde 16 eingewirkt sind. Diese ersten Schmelzklebegarne können jeweils ein mit Schmelzklebstoff ummanteltes Trägergarn aufweisen. Schmelzklebegarne mit Trägergarn sind üblicherweise stabiler als trägergarnlose Schmelzklebegarne und weisen zudem eine höhere Menge an Schmelzklebstoff pro Einheitslänge auf. Die ersten Schmelzklebegarne mit Trägergarn können beispielsweise an Stellen des flächigen Fadengebildes 16 eingesetzt werden, an denen eine höhere mechanische Stabilität erforderlich ist. Zudem kann durch die erhöhte Menge an Schmelzklebstoff pro Einheitslänge die Adhäsion der stärker beanspruchten Stellen an einen zu etikettierenden Textilstoff verstärkt werden. Die Bereiche, an denen eine höhere mechanische Stabilität gewünscht ist, können beispielsweise Ränder des flächigen Fadengebildes 16, ein Bereich um das RFID-Chipmodul 15 herum und/oder Bereich entlang des leitfähigen Antennenfadens 17 sein.

Wie weiterhin in Fig. 2 dargestellt, können ein oder mehrere zweite Schmelzklebegarne in das flächige Fadengebilde 16 eingebracht werden. Diese zweiten Schmelzklebegarne können dabei beispielsweise trägergarnlos sein. Die zweiten trägergarnlosen Schmelzklebegarne können beispielsweise als erste und zweite Langschussfäden 16a, 16b in das flächige Fadengebilde 16 eingewirkt werden, das heißt als Fäden, die den Zusammenhalt der Kettfäden in Transversalrichtung bewirken. Zusätzlich zu den Langschussfäden 16a, 16b können auch Schmelzklebegarne als Teilschussfäden 16c in das flächige Fadengebilde 16
eingewirkt werden. Solche Teilschussfäden 16c sind besonders im Bereich entlang der Erstreckung des leitfähigen Antennenfadens 17 in das flächige Fadengebilde 16 vorteilhaft, um die lokale Stabilität des leitfähigen Antennenfadens 17 zu verbessern, und um zu verhindern, dass sich durch eine Dehnung, Stauchung oder Knitterung - beispielsweise bei einem Heißpressvorgang zum Aufbringen des RFID-Transponders 20 auf einen zu etikettierenden Stoff - die elektrischen Transmissions- und Empfangseigenschaften der durch den leitfähigen Antennenfaden 17 gebildeten Transponderantenne 18 ungewünscht verschlechtern.

Fig. 3 zeigt ein schematisches Schaubild funktioneller Komponenten einer Heißpressanlage für das Aufbringen von textilen RFID-Transpondern, wie beispielsweise des im Zusammenhang mit Fig. 1 und 2 erläuterten RFID-Transponders 20, auf zu etikettierenden Textilien. Beispielsweise kann die Heißpressanlage genutzt werden, um einen RFID-Transponder 20 auf den Stoff 1 einer zu etikettierenden Textilie 10, wie etwa ein Oberbekleidungsstück aufzubringen, wie beispielhaft in Fig. 4 illustriert.

Die Heißpressanlage umfasst zwei Heißpressplatten 2 und 3, zwischen die als unterste Lage der zu etikettierende Textilstoff 1 eingebracht wird. Darüber wird das textile Trägersubstrat 19 eines RFID-Transponders 20 so eingelegt, dass die erste Seite des textilen Trägersubstrat 19 in Richtung des zu etikettierenden Textilstoffes 1 weist, das heißt, dass das RFID-Chipmodul 15 zwischen dem textilen Trägersubstrat 19 und dem zu etikettierenden Textilstoff 1 liegt. Dadurch wird der empfindlichere Teil des RFID-Transponders 20, das heißt das RFID-Chipmodul 15 zwischen dem Trägersubstrat 19 und dem zu etikettierenden Textilstoff 1 eingekapselt. Dies erhöht einen Tragekomfort eines Oberbekleidungsstückes mit einem solchen RFID-Transponder 20 und schützt das RFID-Chipmodul 15 gegenüber mechanischen und chemischen Beanspruchungen beim Waschen.

Fig. 5 zeigt ein abstrahiertes Flussdiagramm eines Verfahrens MI zur Herstellung eines textilen RFID-Transponders. Das Verfähren M1 kann insbesondere zur Herstellung eines textilen RFID-Transponders genutzt werden, wie es im Zusammenhang mit Fig. 1 und 2 erläutert worden ist.

In einem ersten Schritt M11 wird ein textiles Trägersubstrat 19 erzeugt, in welchem mindestens ein elektrisch leitfähiger Antennenfaden 17 und mindestens ein
Schmelzklebegarn in einem flächigen Fadengebilde 16 eingebracht sind. Dieses Erzeugen kann beispielsweise ein Weben oder Flechten umfassen. Alternativ kann das Erzeugen des ersten Schrittes M11 auch ein Wirken des flächigen Fadengebildes 16 umfassen. Beim Wirken des flächigen Fadengebildes 16 kann das Einbringen des mindestens einen elektrisch leitfähigen Antennenfadens 17 und des mindestens einen Schmelzklebegarns jeweils ein Einwirken in das flächige Fadengebilde 16 umfassen, beispielsweise in Form eines Einkettens. Dabei können mehrere verschiedene Schmelzklebegarne verwendet werden: Zum Beispiel können Schmelzklebegarne mit Trägergarn verwendet werden, die im Bereich der Ränder des flächigen Fadengebildes 16, im Bereich des RFID-Chipmoduls 15 und/oder im Bereich des elektrisch leitfähigen Antennenfadens 17 in das flächige Fadengebilde 16 eingewirkt werden. Alternativ oder zusätzlich dazu können ein oder mehrere trägergarnlose Schmelzklebegarne als Langschussfäden 16a; 16b und/oder Teilschussfäden 16c in das flächige Fadengebilde 16 miteingewirkt werden. Als Teilschussfäden 16c eignen sich hierbei insbesondere trägergarnlose Schmelzklebegarne im Bereich entlang der Erstreckung des elektrisch leitfähigen Antennenfadens 17.

In einem zweiten Schritt M12 wird dann ein RFID-Chipmodul 15 mit einer chipgebundenen Modulantenne 11 so auf einer ersten Seite des textilen Trägersubstrats 19 aufgebracht, dass die Modulantenne 11 induktiv in eine durch den mindestens einen leitfähigen Antennenfaden 17 gebildete Transponderantenne 18 einkoppelt.

Ein derart hergestellter RFID-Transponder 20 kann in einem oder als ein textiles Etikett verwendet werden, welches in dem in Fig. 6 beispielhaft dargestellten Verfahren M2 zum Aufbringen eines textilen RFID-Transponders 20 auf zu etikettierende Textilien, wie etwa einem in Fig. 4 dargestellten Oberbekleidungsstück 10, eingesetzt werden kann. Das Verfahren M2 umfasst als ersten Schritt M21 ein Auflegen des textilen RFID-Transponders 20 auf einen Textilstoff 1 einer zu etikettierenden Textilie 10. Dabei wird der RFID-Transponder 20 so orientiert, dass das RFID-Chipmodul 15 zwischen dem textilen Trägersubstrats 19 und dem Textilstoff 1 liegt, das heißt mit der ersten Seite des Trägersubstrats 19 dem Textilstoff 1 zugewandt. In einem zweiten Schritt M22 werden der textile RFID-Transponder 20 und der Textilstoff 1 dann heißgepresst. Das Heißpressen erfolgt bei einer vorbestimmten Temperatur, die während einer vorbestimmten Zeitdauer aufrechterhalten wird. Dabei verschmilzt ein Klebstoff des mindestens einen Schmelzklebegarns des textilen Trägersubstrats 19 mit Fasern des Textilstoffes 1 adhäsiv. Die Temperatur kann dabei beispielsweise zwischen 110°C und 140°C liegen. Diese Temperatur kann bei dem Heißpressvorgang zum Beispiel zwischen 5 und 10 Sekunden lang aufrechterhalten werden, um zu gewährleisten, dass die Schmelzklebstoff der verwendeten Schmelzklebegarn vollständig oder jedenfalls größtenteils aufschmelzen, in die Fasern des Textilstoffes 1 einfließen und beim Erkalten den RFID-Transponder 20 mit selbigem adhäsiv verbinden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist.

## Patentansprüche

1. Ein RFID-Transponder (20), umfassend:
ein textiles Trägersubstrat (19) mit einem flächigen Fadengebilde (16);
mindestens ein elektrisch leitfähiger Antennenfaden (17), welcher in das flächige Fadengebilde (16) des textilen Trägersubstrats (19) eingebracht ist;
ein RFID-Chipmodul (15) mit einer in dem RFID-Chipmodul (15) integrierten Modulantenne (11), welche auf einer ersten Seite des textilen Trägersubstrats (19) aufgebracht ist, so dass die Modulantenne (11) induktiv in eine durch den mindestens einen elektrisch leitfähigen Antennenfaden (17) gebildete Transponderantenne (18) einkoppelt,
**dadurch gekennzeichnet,**
**dass** das flächige Fadengebilde (16) als Maschenware ausgebildet ist und dass in das flächige Fadengebilde (16) des textilen Trägersubstrats (19) mindestens ein Schmelzklebegarn (12; 16a; 16b; 16c) eingebracht ist.

2. Der RFID-Transponder (20) gemäß Anspruch 1, wobei das flächige Fadengebilde (16) als Kettengewirke ausgebildet ist.

3. Der RFID-Transponder (20) gemäß Anspruch 1, wobei das flächige Fadengebilde (16) mindestens ein erstes Schmelzklebegarn aufweist, welches als Kettfaden (12) des Kettengewirkes in das flächige Fadengebilde (16) eingewirkt ist.

4. Der RFID-Transponder (20) gemäß einem der Ansprüche 1 bis 3, wobei die Modulantenne (11) des RFID-Chipmoduls (15) eine Schleifenantenne ist.

5. Der RFID-Transponder (20) gemäß einem der Ansprüche 1 bis 4, wobei der mindestens eine elektrisch leitfähige Antennenfaden (17) eine langgestreckte oder undulierende Transponderantenne (18) als Dipolantenne bildet.

6. Textiles Etikett, umfassend einen RFID-Transponder (20) gemäß einem der Ansprüche 1 bis 5.

7. Ein Verfahren (M1) zur Herstellung eines RFID-Transponders (20), umfassend: Erzeugen (M11) eines textilen Trägersubstrats (19), in welchem mindestens ein elektrisch leitfähiger Antennenfaden (17) eingebracht ist; und
Aufbringen (M12) eines RFID-Chipmoduls (15) mit einer in dem RFID-Chipmodul (15) integrierten Modulantenne (11) auf einer ersten Seite des textilen Trägersubstrats (19), so dass die Modulantenne (11) induktiv in eine durch den mindestens einen elektrisch leitfähigen Antennenfaden (17) gebildete Transponderantenne (18) einkoppelt
**dadurch gekennzeichnet,**
**dass** in das textile Trägersubstrat (19) mindestens ein Schmelzklebegarn (12; 16a; 16b; 16c) in einem flächigen Fadengebilde (16) eingebracht ist.

8. Das Verfahren (M1) gemäß Anspruch 7, wobei das Erzeugen (M11) des textilen Trägersubstrats (19) ein Weben oder Flechten umfasst.

9. Das Verfahren (M1) gemäß Anspruch 7, wobei das Erzeugen (M11) des textilen Trägersubstrats (19) ein Wirken des flächigen Fadengebildes (16) und das Einbringen des mindestens einen elektrisch leitfähigen Antennenfadens (17) und des mindestens einen Schmelzklebegarns ( 2; 16a; 16b; 16c) ein Einwirken in das flächige Fadengebilde (16) umfasst.

10. Das Verfahren (M1) gemäß Anspruch 9, wobei das Einbringen des mindestens einen Schmelzklebegarns (12; 16a; 16b; 16c) ein Einketten in das flächige Fadengebilde (16) umfasst.

11. Ein Verfahren (M2) zum Aufbringen eines textilen RFID-Transponders (20) , welcher nach dem Verfahren nach Anspruch 7 hergestellt wurde, auf zu etikettierende Textilien (10), umfassend:
Auflegen (M21) des textilen RFID-Transponders (20) gemäß einem der Ansprüche 1 bis 6 auf einen Textilstoff (1) einer zu etikettierenden Textilie (10), so dass das RFID-Chipmodul (15)
zwischen dem textilen Trägersubstrat (19) und dem Textilstoff (1) liegt; und
**dadurch gekennzeichnet,**
**dass** durch Heißpressen (M22) des textilen RFID-Transponders (20) und des Textilstoffs (1) für eine vorbestimmte Zeitdauer ein Klebstoff des mindestens einen Schmelzklebegarns (12; 16a; 16b; 16c) des textilen Trägersubstrats (19) mit Fasern des Textilstoffes (1) adhäsiv verschmilzt.

12. Das Verfahren (M2) gemäß Anspruch 11, wobei eine Temperatur beim Heißpressen (M22) während der vorbestimmten Zeitdauer zwischen 110°C und 140°C liegt.

13. Das Verfahren (M2) gemäß einem der Ansprüche 11 und 12, wobei die vorbestimmte Zeitdauer zwischen 5 Sekunden und 10 Sekunden liegt.

## Claims

1. An RFID transponder (20), comprising:
a textile carrier substrate (19) having a flat yarn structure (16);
at least one electrically conductive antenna yarn (17), which is incorporated into the flat yarn structure (16) of the textile carrier substrate (19);
an RFID chip module (15) having a module antenna (11) integrated into the RFID chip module (15), said module antenna being applied to a first side of the textile carrier substrate (19) such that the module antenna (11) is inductively coupled to a transponder antenna (18) formed by the at least one electrically conductive antenna yarn (17),
**characterized in that**
the flat yarn structure (16) is configured as knitwear and **in that**
at least one hot-melt adhesive yarn (12; 16a; 16b; 16c) is incorporated into the flat yarn structure (16) of the textile carrier substrate (19).

2. The RFID transponder (20) according to claim 1, wherein the flat yarn structure (16) is constructed as a warp knit fabric.

3. The RFID transponder (20) according to claim 1, wherein the flat yarn structure (16) comprises at least a first hot-melt adhesive yarn, which is incorporated into the flat yarn structure (16) by knitting as a warp yarn (12) of the warp knit fabric.

4. The RFID transponder (20) according to any one of claims 1 to 3, wherein the module antenna (11) of the RFID chip module (15) is a loop antenna.

5. The RFID transponder (20) according to any one of claims 1 to 4, wherein the at least one electrically conductive antenna yarn (17) forms an elongated or corrugated transponder antenna (18) as a dipole antenna.

6. A textile label, comprising an RFID transponder (20) according to any one of claims 1 to 5.

7. A method (M1) for manufacturing an RFID transponder (20), comprising: producing (M11) a textile carrier substrate (19) into which at least one electrically conductive antenna yarn (17) is incorporated; and
applying (M12) an RFID chip module (15) having a module antenna (11) integrated into the RFID chip module (15) to a first side of the textile carrier substrate (19) such that the module antenna (11) is inductively coupled to a transponder antenna (18) formed by the at least one electrically conductive antenna yarn (17),
**characterized in that**
in the textile carrier substrate (19), at least one hot-melt adhesive yarn (12; 16a; 16b; 16c) is incorporated into a flat yarn structure (16).

8. The method (M1) according to claim 7, wherein the production (M11) of the textile carrier substrate (19) comprises weaving or braiding.

9. The method (M1) according to claim 7, wherein the production (M11) of the textile carrier substrate (19) comprises knitting the flat yarn structure (16) and incorporating the at least one electrically conductive antenna yarn (17) and the at least one hot-melt adhesive yarn (12; 16a; 16b; 16c) comprises insertion by knitting into the flat yarn structure (16).

10. The method (M1) according to claim 9, wherein incorporating the at least one hot-melt adhesive yarn (12; 16a; 16b; 16c) comprises insertion by warp knitting into the flat yarn structure (16).

11. A method (M2) for applying a textile RFID transponder (20), which has been manufactured according to the method of claim 7, to textiles (10) to be labeled, comprising:
applying (M21) the textile RFID transponder (20) according to any one of claims 1 to 6 to a textile material (1) of a textile (10) to be labeled such that the RFID chip module (15) is located between the textile carrier substrate (19) and the textile material (1); and
**characterized in that**
an adhesive of the at least one hot-melt adhesive yarn (12; 16a; 16b; 16c) of the textile carrier substrate (19) fuses adhesively with fibers of the textile material (1) by heat pressing (M22) the textile RFID transponder (20) and the textile material (1) for a predetermined duration.

12. The method (M2) according to claim 11, wherein a temperature during the heat pressing (M22) for the predetermined duration is between 110 °C and 140 °C.

13. The method (M2) according to any one of claims 11 and 12, wherein the predetermined duration is between 5 seconds and 10 seconds.

## Revendications

1. Transpondeur RFID (20), comprenant :
un substrat porteur (19) textile avec une structure de fil plane (16) ;
au moins un fil d'antenne (17) électriquement conducteur, lequel est incorporé dans la structure de fil plane (16) du substrat porteur (19) textile ;
un module de puce RFID (15) avec une antenne de module (11) intégrée dans le module de puce RFID (15), laquelle est appliquée sur une première face du substrat porteur (19) textile de sorte que l'antenne de module (11) soit inductivement couplée à une antenne de transpondeur (18) formée par l'au moins un fil d'antenne (17) électriquement conducteur,
**caractérisé en ce que**
la structure de fil plane (16) est constituée comme tissu maillé et **en ce que**
au moins un fil adhésif thermofusible (12 ; 16a ; 16b ; 16c) est incorporé dans la structure de fil plane (16) du substrat porteur (19) textile.

2. Le transpondeur RFID (20) selon la revendication 1, sachant que la structure de fil plane (16) est constituée comme tricot de chaîne.

3. Le transpondeur RFID (20) selon la revendication 1, sachant que la structure de fil plane (16) présente au moins un premier fil adhésif thermofusible, lequel est inséré par tricotage dans la structure de fil plane (16) comme fil de chaîne (12) du tricot de chaîne.

4. Le transpondeur RFID (20) selon l'une des revendications 1 à 3, sachant que l'antenne de module (11) du module de puce RFID (15) est une antenne boucle.

5. Le transpondeur RFID (20) selon l'une des revendications 1 à 4, sachant que l'au moins un fil d'antenne (17) électriquement conducteur forme une antenne de transpondeur (18) allongée ou ondulée comme antenne dipôle.

6. Etiquette textile, comprenant un transpondeur RFID (20) selon l'une des revendications 1 à 5.

7. Procédé (M1) de fabrication d'un transpondeur RFID (20), comprenant : la production (M11) d'un substrat porteur (19) textile dans lequel au moins un fil d'antenne (17) électriquement conducteur est incorporé ; et
l'application (M12) d'un module de puce RFID (15) avec une antenne de module (11) intégrée dans le module de puce RFID (15) sur une première face du substrat porteur (19) textile de sorte que l'antenne de module (11) soit inductivement couplée à une antenne de transpondeur (18) formée par l'au moins un fil d'antenne (17) électriquement conducteur,
**caractérisé en ce que**
dans le substrat porteur (19) textile, au moins un fil adhésif thermofusible (12 ; 16a ; 16b ; 16c) est incorporé dans une structure de fil plane (16).

8. Le procédé (M1) selon la revendication 7, sachant que la production (M11) du substrat porteur (19) textile comprend un tissage ou un tressage.

9. Le procédé (M1) selon la revendication 7, sachant que la production (M11) du substrat porteur (19) textile comprend un tricotage de la structure de fil plane (16) et l'incorporation de l'au moins un fil d'antenne (17) électriquement conducteur et de l'au moins un fil adhésif thermofusible (12 ; 16a ; 16b ; 16c) comprend une insertion par tricotage dans la structure de fil plane (16).

10. Le procédé (M1) selon la revendication 9, sachant que l'incorporation de l'au moins un fil adhésif thermofusible (12 ; 16a ; 16b ; 16c) comprend une insertion par tricotage de chaîne dans la structure de fil plane (16).

11. Procédé (M2) d'application d'un transpondeur RFID (20) textile, lequel a été fabriqué selon le procédé selon la revendication 7, sur des textiles (10) à étiqueter, comprenant :
la pose (M21) du transpondeur RFID (20) textile selon l'une des revendications 1 à 6 sur une matière textile (1) d'un textile (10) à étiqueter de sorte que le module de puce RFID (15) se trouve entre le substrat porteur (19) textile et la matière textile (1) ; et
**caractérisé en ce que**
une colle de l'au moins un fil adhésif thermofusible (12 ; 16a ; 16b ; 16c) du substrat porteur (19) textile fusionne de manière adhésive avec des fibres de la matière textile (1) par pressage à chaud (M22) du transpondeur RFID (20) textile et de la matière textile (1) pendant une durée prédéterminée.

12. Le procédé (M2) selon la revendication 11, sachant qu'une température lors du pressage à chaud (M22) pendant la durée prédéterminée est comprise entre 110 °C et 140 °C.

13. Le procédé (M2) selon l'une des revendications 11 et 12, sachant que la durée prédéterminée est comprise entre 5 secondes et 10 secondes.
